# FASCICULE DE BREVET EUROPEEN

(11) **EP 2 726 985 B1**
(45) Date de publication et mention de la délivrance du brevet: **06.10.2021**
(21) Numéro de dépôt: 12730913.6
(22) Date de dépôt: 25.06.2012
(51) Int. Cl.: G06F 9/52

(54) **DISPOSITIF ET PROCEDE DE SYNCHRONISATION DE TACHES EXECUTEES EN PARALLELE SUR UNE PLATEFORME COMPRENANT PLUSIEURS UNITES DE CALCUL**
VORRICHTUNG UND VERFAHREN ZUR SYNCHRONISIERUNG VON PARALLEL AUF EINER PLATTFOR MIT MEHREREN RECHENEINHEITEN AUSGEFÜHRTEN AUFGABEN
DEVICE AND METHOD FOR SYNCHRONIZING TASKS EXECUTED IN PARALLEL ON A PLATFORM COMPRISING SEVERAL CALCULATION UNITS

(30) Priorité: 29.06.2011 FR 1155835
(43) Date de publication de la demande: 07.05.2014
(73) Titulaire: Commissariat à l'Énergie Atomique et aux Énergies Alternatives, 75015 Paris (FR)
(72) Inventeur: THABET, Farhat, F-91190 Gif Sur Yvette (FR); LHUILLIER, Yves, F-91440 Bures Sur Yvette (FR); DAVID, Raphael, F-91440 Bures Sur Yvette (FR)
(74) Mandataire: Marks & Clerk France
(86) Numéro de dépôt international: PCT/EP2012/062249
(87) Numéro de publication internationale: WO 2013/000867

(56) Documents cités:
- MAROUN OJAIL ET AL: "Synchronous Reactive Fine Grain Tasks Management for Homogeneous Many-Core Architectures", LECTURE NOTES IN COMPUTER SCIENCE - LNCS; ARCHITECTURE OF COMPUTING SYSTEMS - ARCS 2011 24TH INTERNATIONAL CONFERENCE, COMO, ITALY, FEBRUARY 24-25, 2011 ; PROCEEDINGS / MLADEN BEREKOVIC ... (EDS.), SPRINGER, DE, 24 février 2011 (2011-02-24), pages 144-150, XP008148807, ISSN: 0302-9743
- "Platform 2012: A Many-coreprogrammable accelerator for Ultra-Efficient Embedded Computing inNanometer Technology", STMicroelectronics and CEA Whitepaper, novembre 2010 (2010-11), pages 1-26, XP002669585, Extrait de l'Internet: URL:http://www.cmc.ca/WhatWeOffer/~/media/ WhatWeOffer/TechPub/20101105_Whitepaper_Fi nal.pdf [extrait le 2012-02-14]
- G. Seguin: "Multi-core parallelism for ns-3 simulator", Internship at INRIA Sophia-Antipolis, PLANETE team , 29 août 2009 (2009-08-29), pages 1-15, XP002669586, Extrait de l'Internet: URL:http://guillaume.segu.in/papers/ns3-mu ltithreading.pdf [extrait le 2012-02-14]
- None

## Description

La présente invention concerne un dispositif et procédé de synchronisation de tâches exécutées en parallèle sur une plateforme comprenant plusieurs unités de calcul. Elle s'applique notamment aux plateformes embarquées adaptées au fonctionnement en temps réel.

Avec le développement des applications complexes et diversifiées exécutées sur des plateformes mobiles multi-cœurs, le besoin de parallélisme en calcul et en accès mémoire ne cesse de croître. En effet, pour satisfaire des contraintes d'exécution exigeantes de certaines plateformes telles que les systèmes temps réel par exemple, l'exécution d'une application est découpée en plusieurs blocs de traitement appelés tâches. Ce découpage permet, en mobilisant plusieurs ressources de calcul (coeurs, processeurs par exemple) en parallèle, de réduire le temps de calcul nécessaire à l'exécution de l'application.

Néanmoins le partage de mémoire et la nécessaire coordination de l'exécution des tâches requièrent des moyens de synchronisation des tâches entre elles. Afin d'assurer un parallélisme efficace dans l'exécution de plusieurs tâches sur une même plateforme, il est nécessaire de disposer de moyens de synchronisation performants, la synchronisation constituant généralement le principal goulet d'étranglement des systèmes à mémoire partagée. En effet, lorsque le nombre d'applications exécutées en parallèle et la quantité de mémoire partagée augmentent, alors le temps mobilisé pour la gestion de synchronisation peut augmenter jusqu'à nuire aux performances générales du système, notamment à cause des effets de polling, autrement dit d'attente active, du fait par exemple de la scrutation permanente d'une ou plusieurs variables partagées.

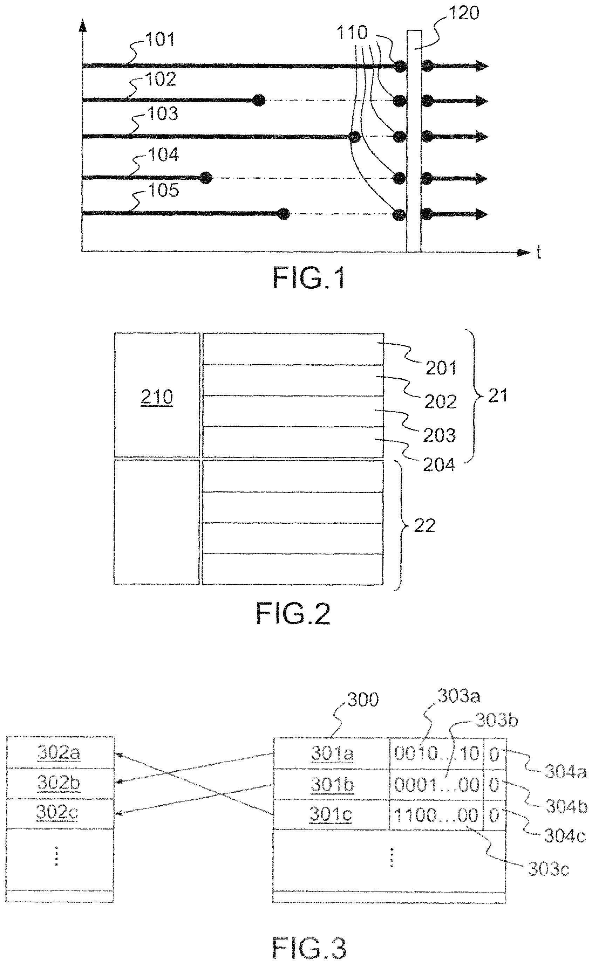

Un exemple de difficulté apparaissant dans les systèmes connus est donné ci-après en regard de la figure 1, pour la mise en œuvre d'une barrière de synchronisation, une méthode souvent utilisée pour créer un point de synchronisation. Par exemple, dans un système embarqué, un calcul complexe peut être découpé en plusieurs tâches 101, 102, 103, 104, 105 parallèles moins complexes. Les résultats partiels 110 obtenus par les différentes tâches peuvent être collectées pour réaliser un autre calcul à travers d'autres tâches. Le point de collection 120 de différents résultats intermédiaires représente une barrière de synchronisation. Les barrières de synchronisation représentent l'une des méthodes les plus utilisées dans les architectures parallèles pour implémenter ce type de point de synchronisation. Une tâche peut finir son calcul avant les autres, mais elle doit attendre la fin de toutes les tâches qui participent à la barrière. Une fois que toutes les tâches ont franchi la barrière 120, elles sont notifiées et leur exécution est poursuivie.

La difficulté de mise en œuvre d'une telle synchronisation réside notamment dans la manière de gérer la phase d'initialisation de la barrière, la phase d'attente pour les tâches qui finissent leur calcul avant les autres et surtout la notification de la fin d'attente. La plupart des solutions utilisent des variables partagées scrutées de façon concurrente par les tâches qui participent à la barrière associée. Dès que le nombre de tâches augmente, des problèmes de dégradation de performances sont constatés. Ces problèmes sont généralement liés à la surcharge réseau et à la compétition (polling) de différentes tâches pour accéder aux variables associées à ce genre de point de synchronisation. De plus, dans un mode de fonctionnement dynamique, des tâches qui participent dans une barrière peuvent être préemptées par le système pour une raison donnée (ex. priorité). Ce genre de scénario peut être fréquent dans les systèmes embarqués d'aujourd'hui, qui intègrent de plus en plus de parallélisme de calcul pour des applications plus complexes. On entend par préemption d'une tâche l'action du système qui consiste à suspendre l'exécution d'une tâche et de la dissocier de son unité de calcul. Lorsque l'exécution de la tâche est reprise, la tâche est à nouveau associée à une unité de calcul (pas nécessairement la même que celle associé avant la préemption). La suspension d'une tâche peut-être provoquée par la tâche elle-même. En général, on ne parle de préemption que lorsque la tâche est suspendue par le système. Cependant, par la suite, nous parlerons de tâche préemptée pour désigner toute tâche qui n'est plus en cours d'exécution et qui n'est plus associée à une unité de calcul.

Plusieurs techniques connues permettent de gérer l'accès concurrent de plusieurs tâches à des ressources partagées et de créer des points de synchronisation entre plusieurs tâches (par exemple une barrière de synchronisation).

Une première approche regroupe les méthodes logicielles. Celles-ci assurent la synchronisation de plusieurs tâches et l'accès mutuellement exclusif à des ressources en utilisant uniquement des moyens logiciels. Ces méthodes peuvent simplement consister en une variable booléenne partagée indiquant le statut d'un jeton : libre ou pris. Une boucle de test de cette variable est introduite dans le code des tâches concurrentes et chaque tâche doit exécuter cette boucle de façon répétée jusqu'à l'obtention du jeton avant de pouvoir accéder à une ressource partagée. Le jeton devient libre lorsque la tâche qui le possède change son état de « pris » à « libre ». Ce type de méthode, parfois appelé « Test-and-Set », est peu performante, notamment à cause des phénomènes de contention qu'elle provoque. En effet, toutes les tâches qui tentent d'obtenir le jeton envoient des requêtes d'accès en même temps et pour un même emplacement mémoire. Ces requêtes simultanées engendrent une dégradation rapide de performances, non seulement au niveau de la mémoire dans laquelle le jeton est stocké, mais aussi au niveau du réseau de connexion qui assure la communication entre les différents modules matériels du système. Pour réduire la contention due au phénomène d'attente active, plusieurs méthodes ont été proposées : l'introduction d'un test préalable à l'exécution de l'instruction « Test-And-Set » afin d'éviter l'exécution systématique de cette dernière (méthode parfois désignée sous le nom de « Test-And-Test-And-Set »), l'insertion d'un délai entre deux requêtes d'accès successives envoyées par chaque tâche, l'utilisation de tickets et/ou de queues d'attente spécifiques pour chaque ressource accessible de façon concurrente. Ces méthodes permettent de limiter la pénalité en termes de latence d'exécution introduite pour certains mécanismes de synchronisation de base, mais elles atteignent leurs limites dès que le nombre de processeurs augmente de façon significative. De plus, dans un contexte de fonctionnement dynamique où les tâches peuvent être mises en attente, préemptées ou migrées à tout moment, au cours de l'attente de l'obtention d'un jeton par exemple, la tâche de synchronisation devient plus compliquée, puisqu'aucune ressource physique n'est en attente active de l'événement.

Une deuxième approche regroupe les méthodes matérielles. Afin d'éviter les latences d'exécution introduites par les approches logicielles, certaines techniques proposent d'implanter matériellement les techniques de synchronisation. Par exemple, selon une première technique, un réseau de connexions dédié uniquement aux opérations de synchronisation est réalisé en plus des réseaux habituels de transport de données et de contrôle. Selon une deuxième technique, certains mécanismes de synchronisation (comme les barrières ou les mutex) sont implémentés avec des opérateurs logiques (ET, OU, ...etc) connectés directement entre eux avec des connexions physiques. Toutefois, l'infrastructure matérielle utilisée pour mettre en œuvre les fonctions de synchronisation est généralement coûteuse en surface de circuit et peu flexible, et donc peu adaptée à l'aspect dynamique d'un système, notamment dans la répartition de la charge de calcul sur les différentes unités de calcul.

Une troisième approche regroupe les méthodes mixtes entre logiciel et matériel. Notamment, la technique AMO, pour « Active Memory Opération » déplace certaines opérations de calcul, généralement implémentées côté processeur, à coté de la mémoire pour réduire le coût d'interaction entre ces deux éléments. Par exemple, Cray T3E fournit un ensemble des opérations atomiques implémentées matériellement comme «fetch&increment» et «compare&swap», comme décrit dans l'article de S.L.Scott « Synchronization and communication in the T3E multiprocessor », publié dans ASPLOS-VII en septembre 1996. Une deuxième technique mixte, appelée TM pour « Tagged Memory », ajoute un bit à chaque mot de donnée stocké en mémoire comme drapeau de verrouillage pour la synchronisation. Cette technique permet une gestion de synchronisation à grain fin, mais elle engendre un surcoût non négligeable en termes de surface silicium. Une troisième technique mixte appelée LCU pour « Lock Control Unit » permet de supporter la préemption et la migration de tâches pour certains mécanismes de synchronisation. Toutefois, cette technique nécessite un module spécifique par unité de calcul ce qui peut entraîner un surcoût non négligeable en termes de surface de circuit, dans un système hiérarchique avec plusieurs clusters multi-cœurs par exemple. De plus, cette technique LCU s'appuie sur des transmissions de messages de synchronisation entre ces modules, ce qui peut engendrer des phénomènes de contention, en particulier lorsque le nombre de tâches et/ou cœurs de calcul augmente en mode de fonctionnement dynamique, c'est-à-dire dans un mode de fonctionnement dans lequel les tâches peuvent être préemptées et/ou migrées.

Le document de Maroun Ojail et al intitulé « Synchronous Reactive fine Grain Tasks Management for Homogenous Many-Core Architectures », lecture notes in computer science, XP008148807, divulgue l'emploi de compteurs atomiques où les tâches sont susceptibles d'être prémptées par le système d'exploitation de la plateforme.

Le document intitulé « Platform 2012 : A Many-coreprogrammable accelerator for Ultra-Efficient Embedded Computing in Nanometer Technology», STmicroelectronics et CEA, XP002669585 présente les mérites des architectures combinant éléments matériels et logiciels pour réaliser un système multi-cœurs efficace.

Un but de l'invention est de synchroniser des tâches exécutées en parallèle sur un système multiprocesseurs en évitant les effets de contention pénalisant en termes de performance et en conservant une flexibilité suffisante pour s'adapter aux systèmes ayant un mode de fonctionnement dynamique (préemption et migration de tâches). A cet effet, l'invention a pour objet un dispositif de synchronisation de tâches exécutées en parallèle sur une plateforme comprenant plusieurs unités de calcul, les tâches étant susceptibles d'être préemptées par le système d'exploitation de la plateforme, le dispositif comprenant au moins un registre et un module d'enregistrement implantés sous la forme de circuits sur ladite plateforme, ledit module d'enregistrement étant adapté à mémoriser une relation entre une condition à satisfaire sur la valeur enregistrée par l'un desdits registres et une ou plusieurs tâches de calcul, le dispositif est caractérisé en ce qu'il comprend un module d'allocation dynamique implanté sous forme de circuits sur la plateforme et configuré pour choisir une unité de calcul parmi les unités de calcul de la plateforme lorsque ladite condition est réalisée, et à lancer l'exécution sur l'unité de calcul choisie d'une fonction logicielle de recherche des tâches en attente de la réalisation de la condition et de notification desdites tâches et en ce que le module d'allocation dynamique est configuré pour lorsqu'une tâche est préemptée, activer un indicateur de préemption pour la ou les conditions dont la réalisation est attendue par ladite tâche, et lorsqu'une tâche reprend son exécution sur une unité de calcul, désactiver l'indicateur de préemption s'il n'existe plus de tâche préemptée associée à la condition.

La relation mémorisée entre le registre et les tâches de calcul peut être une table de correspondance entre un identifiant dudit registre et un ensemble d'identifiants desdites tâches de calcul à notifier. Par exemple, la fonction logicielle recherche et de mise à jour de l'état des tâches signale aux tâches concernées par la réalisation de la condition, que la condition est bien réalisée. Les tâches peuvent par exemple être retrouvées grâces à des tables de correspondances maintenues par le système entre des identifiants de registres, des identifiants d'unités de calcul, et des identifiants de tâches.

Contrairement à des systèmes classiques dans lesquels une ressource de calcul est généralement désignée arbitrairement pour rechercher la tâche préemptée par logiciel (ce qui risque d'interrompre un calcul en cours), une ressource de calcul adéquate pour l'exécution étant allouée par la suite, avec le dispositif selon l'invention, le module matériel d'allocation dynamique désigne, par avance, la ressource de calcul la plus disponible possible pour rechercher la tâche. En outre, dans la majorité des cas, la ressource désignée est la plus adéquate pour l'exécution, puisque par construction, cette ressource est la plus disponible.

Selon un mode de réalisation du dispositif selon l'invention, le dispositif comprend un module de notification configuré pour détecter la réalisation de ladite condition et signaler la réalisation de ladite condition aux tâches non préemptées en relation avec ladite condition lorsque la réalisation de ladite condition est détectée.

Selon un mode de réalisation du dispositif selon l'invention, la signalisation est réalisée par l'émission d'un signal asynchrone aux unités de calculs exécutant lesdites tâches non-préemptés en attente de la condition, ledit signal étant émis aux unités de calcul aux moyens d'une table de correspondance entre unités de calcul et conditions, cette table de correspondance étant mise à jour de manière continue par le système d'exploitation de la plateforme.

Le dispositif selon l'invention permet d'alléger la charge supportée par les unités de calcul, le module de notification prenant en charge la scrutation de la réalisation de la condition. Avantageusement, le module de notification teste si la condition est réalisée après chaque modification de la valeur du registre sur laquelle cette condition est définie.

Selon un mode de réalisation du dispositif selon l'invention, le registre supporte des opérations atomiques de post-incrémentation et/ou de post-décrémentation, adapté à lire la valeur enregistrée par le registre puis à la modifier au sein d'une même opération atomique lors d'un accès en lecture à une plage mémoire lié au dit registre. La présence de ces fonctionnalités permet d'améliorer les performances lors de l'utilisation du registre comme un compteur.

L'invention a également pour objet un procédé de synchronisation de tâches exécutées en parallèle sur une plateforme comprenant plusieurs unités de calcul et un dispositif de synchronisation matériel comportant au moins un registre et un module d'allocation dynamique, une tâche en attente de la satisfaction d'une condition étant préemptée par le système d'exploitation de ladite plateforme, lorsque ladite condition est réalisée, le module d'allocation dynamique choisit une unité de calcul pour exécuter une fonction logicielle configurée pour rechercher les tâches en attente de la réalisation de la condition et notifier lesdites tâches. Le procédé est caractérisé en ce que lorsqu'une tâche est préemptée, un indicateur de préemption est activé pour la ou les conditions dont la réalisation est attendue par ladite tâche, et lorsqu'une tâche reprend son exécution sur une unité de calcul, l'indicateur de préemption est désactivé s'il n'existe plus de tâche préemptée associée à la condition.

Selon une mise en œuvre du procédé de synchronisation de tâches selon l'invention, le module d'allocation dynamique est configuré pour choisir l'unité de calcul en fonction d'au moins un critère parmi les suivants : la charge de calcul attribuée à chacune des unités de calcul de la plateforme, l'état de fonctionnement de chacune des unités de calcul de la plateforme, un niveau de priorité attribué a priori à chacune des unités de calcul de la plateforme.

Selon une mise en œuvre du procédé de synchronisation de tâches selon l'invention, lorsqu'une condition est réalisée, le module d'allocation dynamique provoque une interruption sur l'unité de calcul choisie pour exécuter ladite fonction logicielle de recherche et de mise à jour de l'état des tâches.

Selon une mise en œuvre du procédé de synchronisation de tâches selon l'invention, le module d'allocation dynamique transmet, comme paramètre d'entrée de ladite fonction logicielle, une donnée permettant d'identifier le registre sur lequel est définie la condition réalisée.

Selon une mise en œuvre du procédé de synchronisation de tâches selon l'invention, ladite tâche modifiant la valeur dudit registre modifie la valeur de ce registre lorsqu'une ressource est libérée par ladite tâche. La ressource libérée est par exemple un espace mémoire.
Le procédé de synchronisation selon l'invention peut comprendre une étape d'enregistrement de ladite relation entre la condition à satisfaire et les unités de calcul lors de l'exécution d'une tâche comprenant une phase d'attente d'un signal asynchrone. Le dispositif permet donc de fonctionner en deux phases : une phase d'enregistrement par une tâche devant être notifiée, et une phase de détection et notification.

D'autres caractéristiques apparaîtront à la lecture de la description détaillée donnée à titre d'exemple et non limitative qui suit faite en regard de dessins annexés qui représentent :
- la figure 1, un schéma illustrant le principe de barrière de synchronisation, cette figure ayant déjà été présentée plus haut ;
- la figure 2, un schéma représentant un module de comptage atomique utilisé dans le dispositif selon l'invention ;
- la figure 3, un schéma représentant les interactions entre le module de comptage atomique de la figure 1 et un module de notification ;
- la figure 4, un synoptique illustrant un mode de sélection d'une unité de calcul pour l'exécution de la fonction logicielle chargée de la mise à jour de l'état des tâches préemptées ;
- la figure 5, un synoptique illustrant une file matérielle de message utilisée par l'allocateur dynamique de tâches selon l'invention, pour communiquer avec le système d'exploitation.

La figure 2 représente un module de comptage atomique utilisé dans le dispositif selon l'invention. Le module de comptage comprend un ensemble de compteurs, chaque compteur étant implanté sous la forme d'un registre de préférence accessible via une interface logicielle dédiée. Chaque registre comprend au moins un champ « valeur » apte à enregistrer une valeur de comptage ainsi qu'un autre champ permettant de lire et de modifier la valeur de comptage, par exemple un champ « post-incrément ».

Dans l'exemple de la figure 2, chaque registre 21, 22 (appelé aussi compteur) compris par le module de comptage est affecté d'un identifiant 210 et comprend quatre champs :
▪ un champ « valeur » 201 ; l'accès en lecture à ce champ retourne la valeur enregistrée sans effet de bord, autrement dit, sans la modifier ;
▪ un champ « post-incrément » 202 ; l'accès en lecture à ce champ retourne la valeur du registre et l'incrémente automatiquement et de façon atomique, c'est-à-dire qu'aucune autre opération ne peut avoir lieu sur ce compteur entre la lecture du champ « valeur » et son incrémentation par l'accès au champ « post-incrément » ;
▪ un champ « post-décrément » 203 ; l'accès en lecture à ce champ retourne la valeur du registre et la décrémente automatiquement et de façon atomique, c'est-à-dire qu'aucune autre opération ne peut avoir lieu sur ce compteur entre la lecture du champ « valeur » et sa décrémentation par l'accès au champ « post-décrément » ;
▪ un champ « contrôle » 204 permettant de configurer une borne supérieure et une borne inférieure au champ valeur ; un accès en écriture au champ « contrôle » permet d'activer ou de désactiver (selon l'état de ce champ) un mode de fonctionnement avec bornes, une borne supérieure pouvant être définie par écriture sur le champ post-incrémentation et une borne inférieure pouvant être définie par écriture sur le champ post-décrémentation. La définition de bornes permet notamment d'éviter que le champ « valeur » ne prenne une valeur fausse et soit interprétée comme signifiant que la ressource est libre. Elle permet également de créer différents types de mécanismes de synchronisation (simple mutex ou sémaphore, par exemple). Un sémaphore binaire (0 ou 1) peut ainsi être réalisé aisément grâce à une fixation de bornes.

Avantageusement, une interface logicielle (API pour « Application Programmer Interface ») permet d'accéder aux registres en lecture et écriture, de manière à faciliter la programmation des moyens de synchronisation.

La figure 3 représente les interactions entre le module de comptage atomique de la figure 1 et un module de notification utilisé dans un dispositif selon l'invention.

Le module de notification associe à chaque compteur du module de comptage, un registre reconfigurable permettant aux tâches de s'enregistrer auprès du module pour être averties de la réalisation d'une condition préenregistrée. La signalisation est faite par le biais d'un signal asynchrone envoyé à l'unité de calcul associée (lorsque la tâche a une unité de calcul associée).

Le module de notification enregistre des correspondances entre un compteur atomique, par exemple tel que défini plus haut en regard de la figure 2, et une condition à satisfaire sur la valeur de ce compteur. Cette condition peut être définie par rapport à une valeur donnée, par exemple zéro. Ainsi la condition peut être, par exemple « la valeur du compteur est égale à zéro », d'autres opérateurs pouvant être utilisés à la place de l'opérateur d'égalité, par exemple « inférieur », « supérieur », « inférieur ou égal », « supérieur ou égal ».

Dans l'exemple, la condition est en outre associée à au moins un champ, noté CORE_SET, apte à enregistrer un ou plusieurs identifiants d'unités de calcul. Ce champ permet de préciser les unités de calcul sur lesquelles sont exécutées des tâches devant être notifiées lorsque la condition est satisfaite. Etant donné qu'une seule tâche est exécutée à un instant donné sur une unité de calcul donnée, l'identifiant de l'unité de calcul permet à lui seul de retrouver la tâche à notifier qui est exécutée sur cette unité de calcul.

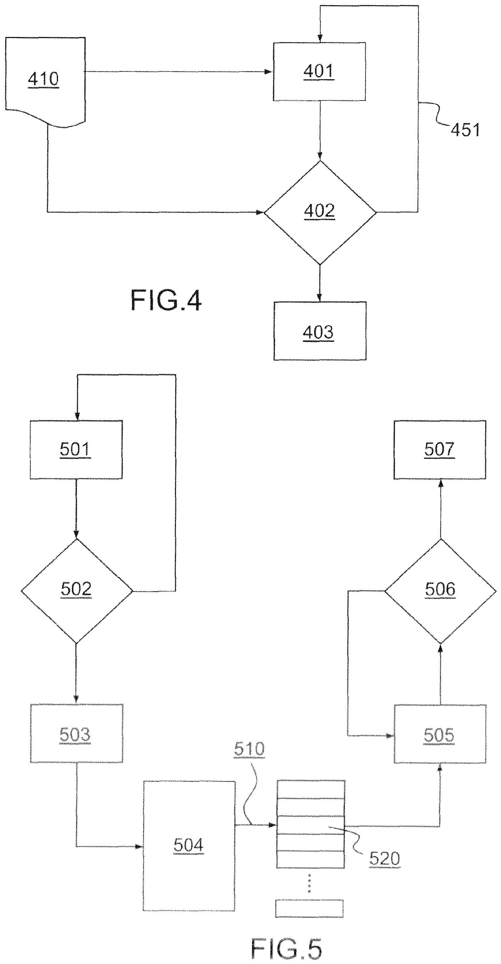

Le module de notification 300 est apte à enregistrer un ensemble de conditions 301a, 301b, 301c, chacune de ces conditions pouvant être associée à un compteur atomique 302a, 302b, 302c. Le champ CORE_SET 303a, 303b, 303c est dans l'exemple, interprété comme une série de bits où chaque bit correspond à une unité de calcul différente, la valeur « 1 » étant attribuée à un bit pour signifier que l'unité de calcul est à notifier en cas de réalisation de la condition correspondante 301a, 301b, 301c. Dans l'exemple, un indicateur de préemption 304a, 304b, 304c, décrit plus loin en regard de la figure 4, est également associé à chaque condition 301a, 301b, 301c.

Selon un autre mode de réalisation du dispositif selon l'invention, la condition est associée à un champ enregistrant des identifiants de tâches à notifier, les unités de calcul exécutant ces tâches étant retrouvées grâce à une ou plusieurs tables maintenues par le système d'exploitation pour mémoriser les correspondances entre tâches et unités de calcul.

Avantageusement, la condition est également associée à un champ PENDING et un champ EVT_ID. Le champ PENDING spécifie si une ou plusieurs tâches qui attendent la réalisation d'une condition ont été préemptées. Le champ EVT_ID spécifie l'identifiant de l'événement utilisé pour notifier les tâches concernées lorsque la condition est satisfaite.

De préférence, l'utilisation du module de notification est facilitée par deux fonctions logicielles. Une première fonction, par exemple notée MN_SET(), permet de définir une condition à satisfaire et une deuxième fonction, par exemple notée MN_UPDATE(), permet à une tâche de s'enregistrer auprès de la condition créée préalablement. Dans l'exemple, la fonction MN_SET() est exécutée lors de la création d'un outil de synchronisation, tel qu'une barrière de synchronisation, par exemple. Cette fonction prend comme paramètres d'entrée, un identifiant de compteur atomique, une condition à satisfaire sur ce compteur atomique, et un identifiant d'événement EVT_ID, l'ensemble CORE_SET des unités de calcul à notifier étant initialisé à l'ensemble vide. La fonction MN_UPDATE() est exécutée lors de l'exécution d'une tâche, notamment pour mettre à jour les champs CORE_SET et PENDING, et ainsi préciser quelle unité de calcul ou tâche doit être notifiée lors de la satisfaction de la condition. Dans l'exemple, cette fonction prend comme paramètres d'entrée, l'identifiant de compteur atomique et l'identifiant de l'unité de calcul sur laquelle la tâche est exécutée. Avantageusement, la fonction MN_UPDATE prend également un paramètre définissant le type d'opération de mise à jour à effectuer sur le champ PENDING lorsqu'une tâche est préemptée au cours de l'attente de la satisfaction d'une condition.

Dans l'exemple, Le module de notification met en œuvre un premier module matériel d'enregistrement de conditions à satisfaire, le module étant appelé CS par la suite, en référence à l'expression anglo-saxonne « Condition Storage » et un deuxième module matériel de détection de la réalisation d'une condition, désigné par la suite par le sigle CC, pour « Condition Checking ».

Le module CS permet de créer une association entre un compteur atomique et une condition à satisfaire pour signaler à une ou plusieurs tâches la réalisation de la condition. Dans l'exemple, ce module CS est activé par la fonction MN_SET() pour écrire en mémoire une correspondance entre un compteur et une condition, puis par la fonction MN_UPDATE() pour associer une ou plusieurs unités de calcul ou tâches à cette condition.

Le module CC permet de détecter une condition remplie, de manière à signaler la réalisation de la condition à la ou les tâches concernées par cette condition. Le module CC scrute localement et en permanence les compteurs atomiques. Dès que la valeur d'un des compteurs est modifiée, et si une condition est associée à ce compteur, le module CC détermine si la valeur modifiée vérifie la condition associée. Si cette condition est vérifiée, alors un événement est généré par le module de notification, autrement dit, un signal asynchrone est transmis vers les unités de calcul référencées dans le champ CORE_SET.

Le module de notification tel que décrit ci-dessus fonctionne correctement dans un environnement statique, c'est-à-dire sur un système dans lequel une tâche ayant commencé son exécution sur une unité de calcul ne peut être interrompue par l'exécution d'une autre tâche sur cette même unité de calcul. En effet, dans le cas d'un fonctionnement en mode statique, la correspondance entre unités de calcul et tâches est invariante au cours de l'exécution des tâches ; l'exécution des tâches est séquentielle, sur chacune des unités de calcul. Dans un système dynamique, où les tâches peuvent être préemptées à tout moment, la relation entre l'ensemble des tâches exécutées et l'ensemble des unités de calcul qui les exécutent est susceptible de changer à tout moment. Ainsi, l'indicateur supplémentaire PENDING doit être associé à la condition à satisfaire pour éviter les notifications perdues. Cet indicateur de préemption permet de préciser si au moins une tâche en attente de réalisation d'une condition a été préemptée. Lorsque l'indicateur de préemption est positionné à une première valeur, par exemple « zéro » ou « désactivé », cela signifie qu'aucune des tâches en attente de réalisation de la condition n'a été préemptée. Si au contraire, l'indicateur est positionné, par exemple à la valeur « un » ou « activé », cela signifie qu'au moins une tâche a été préemptée et, soit mise en attente par le système d'exploitation, soit déplacée vers une autre unité de calcul. Le ou les champs du CORE_SET correspondants aux unités de calcul sur lesquelles étaient exécutées les tâches préemptées deviennent alors obsolètes puisque leur état ne correspond plus aux tâches à notifier.

Ainsi, lorsqu'une tâche en attente de la réalisation d'une condition est préemptée, alors les requêtes de notification, enregistrées dans l'exemple sous la forme du champ CORE_SET, sont désactivées et l'indicateur de préemption correspondant à la condition attendue est activé. De même, si plusieurs conditions sont en attente de réalisation par une même tâche, alors chacun des champs CORE_SET correspondant à ces conditions est réinitialisé et tous les indicateurs de préemption correspondant à ces mêmes conditions sont activés. En outre, si plusieurs tâches sont en attente de la réalisation d'une même condition, et qu'une seule de ces tâches est préemptée, alors l'indicateur de préemption est activé.

Lorsque l'indicateur de préemption est activé, alors les tâches en attente d'une condition peuvent être retrouvées via un module d'allocation dynamique, décrit en regard de la figure 4.

Une fonction de mise à jour de l'état des tâches en attente de réalisation d'une condition est mise en œuvre. Cette fonction recherche lesdites tâches (notamment celles qui ont été préemptées) et leur signale la réalisation de la condition associée. Par exemple, pour chaque unité de calcul, une file de message implantée matériellement est mise en œuvre spécifiquement pour générer une interruption et lancer l'exécution de la fonction de mise à jour de l'état des tâches. Cette file de message est appelée par la suite « queue matérielle ». Selon un autre mode de réalisation, seulement certaines des unités de calcul sont sélectionnables pour exécuter la fonction de recherche et de notification. Dans ce cas, seules ces unités de calcul sélectionnables disposent d'une queue matérielle dédiée à la notification des tâches en attente de réalisation d'une condition.

Lorsqu'une condition est réalisée, le module d'allocation dynamique déclenche l'exécution d'une interruption pour exécuter la fonction système permettant de retrouver et mettre à jour l'état des tâches en attente de la réalisation de ladite condition. Cette fonction système permet de notifier des tâches préemptées ou migrées vers d'autres unités de calcul de la réalisation de la condition dont elles attendent la réalisation. Cette fonction système est exécutée sur une unité de calcul choisie par le module d'allocation dynamique, en fonction des priorités enregistrées dans la liste de correspondances entre unités de calcul et priorités.

A titre d'illustration, les priorités peuvent notamment être déterminées en fonction de l'état de fonctionnement des unités de calcul, du taux de remplissage des queues matérielles, ou de priorités affectées a priori à chacune des unités de calcul. Ainsi, par exemple, dès qu'une unité de calcul devient défaillante, un champ du module d'allocation dynamique est mis à jour pour signifier que cette unité de calcul a une priorité attribuée plus faible. De même, lorsqu'une queue matérielle d'attente associée à une unité de calcul est vide, cela signifie que l'unité de calcul est au repos et que par conséquent, l'unité de calcul peut être affectée d'une priorité supérieure à celles dont la queue matérielle associée est non vide. Il est à noter que le niveau de priorité attribué à chaque unité de calcul est de préférence accessible au système d'exploitation, de sorte que ce dernier puisse bénéficier des informations maintenues par le module d'allocation dynamique pour allouer dynamiquement une tâche à une unité de calcul. Dans l'exemple, le système d'exploitation est configuré pour mettre régulièrement à jour une liste enregistrée par le module matériel d'allocations dynamique, cette liste comprenant des correspondances entre unités de calculs et priorités, chaque unité de calcul étant affectée d'une priorité.

Selon un autre mode de réalisation, le module d'allocation dynamique déclenche l'exécution de la fonction logicielle de mise à jour de l'état des tâches (autrement dit, de recherche et de notification des tâches) en choisissant une unité de calcul aléatoirement parmi les unités de calcul de la plateforme.

Dans l'exemple, la fonction de mise à jour de l'état des tâches prend comme paramètre l'identifiant du compteur atomique sur lequel la condition est réalisée. Cette fonction exécute les étapes suivantes :
▪ rechercher les tâches qui attendent la réalisation de la condition précitée ; pour cela, une table de correspondances entre les identifiants de compteurs atomiques, les structures de synchronisation mises en œuvre (c'est-à-dire les structures de données créées lors de la création des primitives de synchronisation telles qu'un sémaphore, par exemple) et les tâches concernées est maintenue par le système d'exploitation (parfois, le système d'exploitation est appelé également « logiciel système » sur les systèmes embarqués);
▪ signaler à la tâche ou aux tâches en attente de la réalisation de la condition ; avantageusement, la fonction de mise à jour des tâches prend comme paramètre le type d'événement à transmettre à la tâche ou aux tâches en attente.

Dans l'exemple, le module d'allocations dynamique utilise une file matérielle de messages, décrite en regard de la figure 5, et accessible par le système d'exploitation pour transmettre un message d'assignation de la fonction de mise à jour de l'état des tâches au système.

La figure 4 illustre un mode de sélection d'une unité de calcul pour l'exécution de la fonction logicielle chargée de la mise à jour de l'état des tâches préemptées. Dans un premier temps, l'allocateur dynamique effectue un tri 401 des unités de calcul en fonction de données 410 tels que l'état de fonctionnement des unités de calcul, du taux de remplissage des queues matérielles associées à chaque unité de calcul, ou de priorités affectées a priori à chacune des unités de calcul. Ensuite, un test 402 est exécuté pour déterminer quelle unité de calcul est la plus disponible pour exécuter une fonction de mise à jour de l'état des tâches. Il est à noter qu'entre la première étape 401 de tri et la deuxième étape 402 de test, une unité de calcul peut avoir changé d'état et devenir défaillante. Aussi, les données 410 sont de préférence utilisées également lors de la deuxième étape 402. Si aucune unité de calcul n'est disponible, alors le procédé revient 451 à la première étape 401 de tri des unités de calcul. Si une unité de calcul est disponible 403, alors un message est écrit dans une queue matérielle associée à l'unité de calcul et une interruption est générée pour lancer l'exécution de la fonction de mise à jour de l'état des tâches. Cette étape est illustré en figure 5.

La figure 5 illustre, via un synoptique, le fonctionnement d'un module de notification par messages utilisée par le module d'allocation dynamique de tâches.

Dans un premier temps 501, une unité de calcul est choisie (cf. figure 4) et un accès est demandé à la file de messages de l'unité de calcul choisie. Un sémaphore protégeant la file de messages contre les accès concurrents est testé 502 pour savoir si l'accès en écriture à la file est autorisé. Si l'accès est autorisé, alors un message est écrit 503 dans la file de messages, le message comprenant l'identifiant du compteur sur lequel la condition est définie et le type d'événement à transmettre à la tâche ou aux tâches de calcul à notifier.

Après que le message a été écrit dans la file de messages, le gestionnaire d'interruptions 504 génère une interruption 510 vers l'unité de calcul choisie 520 précédemment. Cette unité de calcul 520 accède en lecture 505 à la file de message pour récupérer son contenu. Si la file contient plusieurs messages, plusieurs lectures successives sont réalisées. Une fois la file est vide, le ou les messages lues 507 sont traités et la fonction logicielle de mise à jour des tâches est exécutée avec les paramètres contenus dans le ou les messages.

Selon un autre mode de réalisation, le module d'allocations dynamique n'utilise pas de file de messages et le système comprend une ligne d'interruption particulière associée à l'émission d'un événement de synchronisation. Ainsi, dès qu'une condition est réalisée, la fonction système de mise à jour des tâches en attente de cette condition est exécutée sur l'unité de calcul choisie par le module d'allocation dynamique, la tâche précédemment en cours d'exécution sur cette unité de calcul (si l'unité de calcul n'était pas libre) étant mise en attente.

L'ensemble formé par le module de comptage, le module de notification et le module d'allocations dynamique peut être utilisé dans une plateforme multi-cœurs sous la forme d'un circuit programmable de type FPGA (« Field-Programmable Gate Array ») ou d'un circuit intégré de type ASIC (« Application Specific Integrated Circuit »), par exemple. Un pilote logiciel peut être intégré au logiciel système de la plateforme, de manière à établir une interface entre ce circuit et le système d'exploitation (runtime), de manière par exemple à pouvoir exécuter les fonctions MN_SET() et MN_UPDATE() pour bénéficier du support matériel fourni par ce dispositif.

Le dispositif selon l'invention a notamment pour avantage qu'il constitue un compromis judicieux entre une approche purement matérielle et une approche purement logicielle dans la gestion des moyens de synchronisation de tâches. En effet, avec l'utilisation d'une petite surface de silicium, le dispositif permet de décharger considérablement les autres organes de la plateforme de la lourde gestion de la synchronisation entre tâches. La gestion des attentes d'événements, classiquement très pénalisante pour les performances d'un système multi-tâches, est gérée par des moyens matériels suffisamment réduits pour ne pas occuper un espace trop important sur le circuit.

Le dispositif selon l'invention peut notamment être employé dans les terminaux de communications mobiles multi-cœurs ou plus généralement dans des plateformes embarquées multi-processeurs, celles-ci ayant des contraintes d'espace disponible et de temps d'exécution assez fortes.

## Revendications

1. Dispositif de synchronisation de tâches exécutées en parallèle sur une plateforme comprenant plusieurs unités de calcul, les tâches étant susceptibles d'être préemptées par le système d'exploitation de la plateforme, le dispositif comprenant au moins un registre (302a, 302b, 302c) et un module d'enregistrement implantés sous la forme de circuits sur ladite plateforme, ledit module d'enregistrement étant adapté à mémoriser une relation entre une condition à satisfaire (301a, 301b, 301c) sur la valeur enregistrée par l'un desdits registres (302a, 302b, 302c) et une ou plusieurs tâches de calcul, le dispositif est **caractérisé en ce qu'**il comprend un module d'allocation dynamique (402) implanté sous forme de circuits sur la plateforme et configuré pour choisir une unité de calcul (520) parmi les unités de calcul de la plateforme lorsque ladite condition est réalisée, et à lancer l'exécution (403) sur l'unité de calcul choisie (520) d'une fonction logicielle de recherche des tâches en attente de la réalisation de la condition et de notification desdites tâches et **en ce que** le module d'allocation dynamique (402) est configuré pour, lorsqu'une tâche est préemptée, activer un indicateur de préemption (304a, 304b, 304c) pour la ou les conditions (301a, 301b, 301c) dont la réalisation est attendue par ladite tâche, et lorsqu'une tâche reprend son exécution sur une unité de calcul, désactiver l'indicateur de préemption (304a, 304b, 304c)
s'il n'existe plus de tâche préemptée associée à la condition (301a, 301b, 301c).

2. Dispositif de synchronisation selon la revendication 1, le dispositif comprenant un module de notification configuré pour détecter la réalisation de ladite condition (301a, 301b, 301c) et signaler la réalisation de ladite condition aux tâches non préemptées en relation avec ladite condition lorsque la réalisation de ladite condition est détectée.

3. Dispositif de synchronisation selon la revendication 2, dans lequel la signalisation est réalisée par l'émission d'un signal asynchrone aux unités de calculs exécutant lesdites tâches non-préemptés en attente de la condition (301a, 301b, 301c), ledit signal étant émis aux unités de calcul aux moyens d'une table de correspondance entre unités de calcul et conditions, cette table de correspondance étant mise à jour de manière continue par le système d'exploitation de la plateforme.

4. Dispositif de synchronisation de tâches selon l'une quelconque des revendications précédentes, dans lequel le registre (21) supporte des opérations atomiques de post-incrémentation (202) et/ou de post-décrémentation (203), adapté à lire la valeur enregistrée par le registre puis à la modifier au sein d'une même opération atomique lors d'un accès en lecture à une plage mémoire lié au dit registre.

5. Procédé de synchronisation de tâches exécutées en parallèle sur une plateforme comprenant plusieurs unités de calcul et un dispositif de synchronisation matériel comportant au moins un registre et un module d'allocation dynamique (402), une tâche en attente de la satisfaction d'une condition (301a, 301b, 301c) étant préemptée par le système d'exploitation de ladite plateforme, lorsque ladite condition (301a, 301b, 301c) est réalisée, le module d'allocation dynamique (402) choisit une unité de calcul pour exécuter une fonction logicielle configurée pour rechercher les tâches en attente de la réalisation de la condition et notifier lesdites tâches **caractérisé en ce que** lorsqu'une tâche est préemptée, un indicateur de préemption est activé pour la ou les conditions (301a, 301b, 301c) dont la réalisation est attendue par ladite tâche, et lorsqu'une tâche reprend son exécution sur une unité de calcul, l'indicateur de préemption (304a, 304b, 304c) est désactivé s'il n'existe plus de tâche préemptée associée à la condition (301a, 301b, 301c).

6. Procédé de synchronisation de tâches selon la revendication 5, dans lequel le module d'allocation dynamique (402) est configuré pour choisir l'unité de calcul en fonction d'au moins un critère parmi les suivants : la charge de calcul attribuée à chacune des unités de calcul de la plateforme, l'état de fonctionnement de chacune des unités de calcul de la plateforme, un niveau de priorité attribué a priori à chacune des unités de calcul de la plateforme.

7. Procédé de synchronisation de tâches selon la revendication 5 ou 6, dans lequel, lorsqu'une condition est réalisée, le module d'allocation dynamique (402) provoque une interruption sur l'unité de calcul choisie pour exécuter ladite fonction logicielle de recherche et de mise à jour de l'état des tâches.

8. Procédé de synchronisation de tâches selon l'une des revendications 5 à 7, dans lequel le module d'allocation dynamique (402) transmet, comme paramètre d'entrée de ladite fonction logicielle, une donnée permettant d'identifier le registre (302a, 302b, 302c) sur lequel est définie la condition réalisée.

9. Procédé de synchronisation selon l'une quelconque des revendications 5 à 8, dans lequel ladite tâche modifiant la valeur dudit registre (302a, 302b, 302c) modifie la valeur de ce registre lorsqu'une ressource est libérée par ladite tâche.

10. Procédé de synchronisation selon l'une quelconque des revendications 5 à 9, comprenant une étape d'enregistrement de ladite relation entre la condition (301a, 301b, 301c) à satisfaire et les unités de calcul lors de l'exécution d'une tâche comprenant une phase d'attente d'un signal asynchrone.

## Patentansprüche

1. Vorrichtung zur Synchronisierung von parallel auf einer Plattform, welche mehrere Recheneinheiten umfasst, ausgeführten Aufgaben, wobei die Aufgaben geartet sind, durch das Betriebssystem der Plattform vorbelegt zu werden, wobei die Vorrichtung mindestens ein Register (302a, 302b, 302c) und ein Aufzeichnungsmodul umfasst, welche in Form von Schaltkreisen auf der Plattform implementiert sind, wobei das Aufzeichnungsmodul geeignet ist, eine Beziehung zwischen einer zu erfüllenden Bedingung (301a, 301b, 301c) in Bezug auf den durch eines der Register (302a, 302b, 302c) aufgezeichneten Wert und einer oder mehrerer Rechenaufgaben zu speichern, wobei die Vorrichtung **dadurch gekennzeichnet ist, dass** sie ein dynamisches Zuweisungsmodul (402) umfasst, welches in Form von Schaltkreisen auf der Plattform implementiert und konfiguriert ist, um eine Recheneinheit (520) aus den Recheneinheiten der Plattform zu wählen, wenn die Bedingung erfüllt ist, und die Ausführung (403), auf der gewählten Recheneinheit (520), einer Softwarefunktion zur Suche nach den auf die Erfüllung der Bedingung wartenden Aufgaben und zur Mitteilung der Aufgaben anzustoßen, und dadurch, dass das dynamische Zuweisungsmodul (402) dazu konfiguriert ist, wenn eine Aufgabe vorbelegt ist, einen Vorbelegungsanzeiger (304a, 304b, 304c) für die Bedingung bzw. die Bedingungen (301a, 301b, 301c) zu aktivieren, deren Erfüllung durch die Aufgabe erwartet wird, und wenn eine Aufgabe ihre Ausführung an einer Recheneinheit wieder aufnimmt, den Vorbelegungsanzeiger (304a, 304b, 304c) zu deaktivieren, wenn keine der Bedingung (301a, 301b, 301c) zugeordnete, vorbelegte Aufgabe mehr vorliegt.

2. Synchronisierungsvorrichtung nach Anspruch 1, wobei die Vorrichtung ein Mitteilungsmodul umfasst, welches konfiguriert ist, um die Erfüllung der Bedingung (301a, 301b, 301c) zu erkennen und die Erfüllung der Bedingung den nicht vorbelegten Aufgaben, die in Verbindung mit der Bedingung stehen, zu melden, wenn die Erfüllung der Bedingung erkannt wird.

3. Synchronisierungsvorrichtung nach Anspruch 2, wobei die Signalisierung durch Aussenden eines asynchronen Signals an die Recheneinheiten erfolgt, welche die nicht vorbelegten Aufgaben, die die Bedingung (301a, 301b, 301c) erwarten, ausführen, wobei das Signal an die Recheneinheiten mit Hilfe einer Entsprechungstabelle zwischen Recheneinheiten und Bedingungen ausgesendet wird, wobei diese Entsprechungstabelle kontinuierlich durch das Betriebssystem der Plattform aktualisiert wird.

4. Vorrichtung zur Synchronisierung von Aufgaben nach einem der vorhergehenden Ansprüche, wobei das Register (21) atomare Schritte von Post-Inkrementierung (202) und/oder von Post-Dekrementierung (203) unterstützt, dazu geeignet, den durch das Register aufgezeichneten Wert zu lesen und diesen anschließend in einem gleichen atomaren Schritt bei einem Lesezugriff auf einen mit dem Register verbundenen Speicherbereich zu ändern.

5. Verfahren zur Synchronisierung von Aufgaben, die parallel auf einer Plattform ausgeführt werden, welche mehrere Recheneinheiten und eine materielle Synchronisierungsvorrichtung umfasst, welche mindestens ein Register und ein dynamisches Zuweisungsmodul (402) aufweist, wobei eine in Erwartung der Erfüllung einer Bedingung (301a, 301b, 301c) stehende Aufgabe durch das Betriebssystem der Plattform vorbelegt wird, wenn die Bedingung (301a, 301b, 301c) erfüllt ist, wobei das dynamische Zuweisungsmodul (402) eine Recheneinheit zum Ausführen einer Softwarefunktion auswählt, welche konfiguriert ist, um nach den auf die Erfüllung der Bedingung wartenden Aufgaben zu suchen und den Aufgaben mitzuteilen, **dadurch gekennzeichnet, dass**, wenn eine Aufgabe vorbelegt ist, ein Vorbelegungsanzeiger für die Bedingung bzw. die Bedingungen (301a, 301b, 301c) aktiviert wird, deren Erfüllung durch die Aufgabe erwartet wird, und, wenn eine Aufgabe ihre Ausführung an einer Recheneinheit wieder aufnimmt, der Vorbelegungsanzeiger (304a, 304b, 304c) deaktiviert wird, wenn keine der Bedingung (301a, 301b, 301c) zugeordnete, vorbelegte Aufgabe mehr vorliegt.

6. Verfahren zur Synchronisierung von Aufgaben nach Anspruch 5, wobei das dynamische Zuweisungsmodul (402) konfiguriert ist, um die Recheneinheit mindestens angesichts eines der folgenden Kriterien auszuwählen: der an jede der Recheneinheiten der Plattform zugeteilte Rechenlast, des Betriebszustandes einer jeden der Recheneinheiten der Plattform, eines Prioritätslevels, welcher a priori jeder der Recheneinheiten der Plattform zugeteilt ist.

7. Verfahren zur Synchronisierung von Aufgaben nach Anspruch 5 oder 6, wobei, wenn eine Bedingung erfüllt ist, das dynamische Zuweisungsmodul (402) eine Unterbrechung an der Recheneinheit hervorruft, die ausgewählt ist, um die Softwarefunktion zur Suche und zur Aktualisierung des Zustandes der Aufgaben auszuführen.

8. Verfahren zur Synchronisierung von Aufgaben nach einem der Ansprüche 5 bis 7, wobei das dynamische Zuweisungsmodul (402), als Eingangsparameter der Softwarefunktion, ein Datum überträgt, welches dazu dient, das Register (302a, 302b, 302c) zu identifizieren, in welchem die erfüllte Bedingung definiert ist.

9. Synchronisierungsverfahren nach einem der Ansprüche 5 bis 8, wobei die Aufgabe, welche den Wert des Registers (302a, 302b, 302c) ändert, den Wert dieses Registers ändert, wenn eine Ressource durch die Aufgabe freigesetzt wird.

10. Synchronisierungsverfahren nach einem der Ansprüche 5 bis 9, umfassend einen Schritt des Aufzeichnens der Beziehung zwischen der zu erfüllenden Bedingung (301a, 301b, 301c) und den Recheneinheiten bei der Ausführung einer Aufgabe, welche eine Wartephase auf ein asynchrones Signal umfasst.

## Claims

1. A device for synchronizing tasks executed in parallel on a platform comprising multiple computation units, the tasks being apt to be preempted by the operating system of the platform, the device comprising at least one register (302a, 302b, 302c) and a recording module which are installed in the form of circuits on said platform, said recording module being suitable for storing a relationship between a condition to be satisfied (301a, 301b, 301c) on the value recorded by one of said registers (302a, 302b, 302c) and one or more computation tasks, the device being **characterized in that** it comprises a dynamic allocation module (402) installed in the form of circuits on the platform and configured to choose a computation unit (520) from among the computation units of the platform when said condition is fulfilled, and for launching the execution (403) on the chosen computation unit (520) of a software function for searching for the tasks on standby awaiting the fulfillment of the condition and for notifying said tasks, and **in that** the dynamic allocation module (402) is configured to activate, when a task is preempted, a preemption indicator (304a, 304b, 304c) for the one or more conditions (301a, 301b, 301c), the fulfillment of which is expected from said task, and when a task resumes its execution on a computation unit, to deactivate the preemption indicator (304a, 304b, 304c) if there no longer exists any preempted task associated with the condition (301a, 301b, 301c).

2. The synchronization device according to claim 1, the device comprising a notification module configured to detect the fulfillment of said condition (301a, 301b, 301c) and to signal the fulfillment of said condition to the non-preempted tasks in relation to said condition when the fulfillment of said condition is detected.

3. The synchronization device according to claim 2, wherein the signaling is carried out by sending an asynchronous signal to the computation units executing said non-preempted tasks on standby awaiting the condition (301a, 301b, 301c), said signal being sent to the computation units by means of a lookup table of correspondence between computation units and conditions, this lookup table being updated continuously by the operating system of the platform.

4. The device for synchronizing tasks according to any one of the preceding claims, wherein the register (21) supports atomic operations of post-incrementation (202) and/or of post-decrementation (203), suitable for reading the value recorded by the register and then for modifying it within one and the same atomic operation during read-access to a memory slot related to said register.

5. A method for synchronizing tasks executed in parallel on a platform comprising multiple computation units and a hardware synchronization device having at least one register and one dynamic allocation module (402), a task on standby awaiting the satisfaction of a condition (301a, 301b, 301c) being preempted by the operating system of said platform, when said condition (301a, 301b, 301c) is fulfilled, the dynamic allocation module (402) choosing a computation unit to execute a software function configured to search for the tasks on standby awaiting the fulfillment of the condition and to notify said tasks, **characterized in that**, when a task is preempted, a preemption indicator is activated for the one or more conditions (301a, 301b, 301c), the fulfillment of which is expected from said task, and when a task resumes its execution on a computation unit, the preemption indicator (304a, 304b, 304c) is deactivated, if there no longer exists any preempted task associated with the condition (301a, 301b, 301c).

6. The method for synchronizing tasks according to claim 5, wherein the dynamic allocation module (402) is configured to choose the computation unit as a function of at least one criterion from among the following: the computation load allotted to each of the computation units of the platform, the operating state of each of the computation units of the platform, a priority level allotted a priori to each of the computation units of the platform.

7. The method for synchronizing tasks according to claim 5 or 6, wherein, when a condition is fulfilled, the dynamic allocation module (402) causes an interruption on the computation unit chosen to execute said software function for searching for and for updating the state of the tasks.

8. The method for synchronizing tasks according to one of claims 5 to 7, wherein the dynamic allocation module (402) transmits, as input parameter of said software function, a datum making it possible to identify the register (302a, 302b, 302c) on which the fulfilled condition is defined.

9. The synchronization method according to any one of claims 5 to 8, wherein said task modifying the value of said register (302a, 302b, 302c) modifies the value of this register when a resource is freed by said task.

10. The synchronization method according to any one of claims 5 to 9, comprising a step of recording said relationship between the condition (301a, 301b, 301c) to be satisfied and the computation units during the execution of a task comprising a phase of awaiting an asynchronous signal.
